# EUROPÄISCHE PATENTSCHRIFT

(11) **EP 2 080 606 B1**
(45) Veröffentlichungstag und Bekanntmachung des Hinweises auf die Patenterteilung: **09.09.2015**
(21) Anmeldenummer: 08171217.6
(22) Anmeldetag: 10.12.2008
(51) Int. Cl.: B29C 49/42, B29C 33/30, B29C 33/34, B29C 49/66, B29C 49/36, B29C 49/06, B29C 33/00

(54) **Verfahren zum Umrüsten einer Blasmaschine**
Method for customising a blowing machine
Procédé de rééquipement d'une souffleuse

(30) Priorität: 16.01.2008 DE 102008004773
(43) Veröffentlichungstag der Anmeldung: 22.07.2009
(60) Teilanmeldung: 15163092.8
(73) Patentinhaber: Krones AG, 93073 Neutraubling (DE)
(72) Erfinder: Stoiber, Christian, 93185 Michelsneukirchen (DE)
(74) Vertreter: Reichert & Lindner Partnerschaft Patentanwälte

(56) Entgegenhaltungen:
- DE-A1-102005 035 233
- DE-A1-102007 005 489
- US-A- 4 035 463
- US-B1- 6 447 281

## Beschreibung

Die vorliegende Erfindung betrifft ein Verfahren zum Umrüsten einer Blasmaschine. Im Besonderen betrifft die Erfindung ein Verfahren zum Umrüsten einer Blasmaschine, die eine Vielzahl von mehrteiligen Formenträgern umfasst. Jeder der Formenträger hält eine mehrteilige Blasform, wobei mindestens eine Blasform oder der Formträger mit mindestens einer Medienzuführung verbunden ist.

Eine Blasmaschine wird insbesondere zum Streckblasen von Vorformlingen verwendet. Die Blasmaschine selbst umfasst dabei mindestens eine Blasform. Für das Streckblasen von Vorformlingen für Kunststoffflaschen werden Blasformen verwendet, in die ein Vorformling mit Überdruck im Innern der Blasform formgeblasen, d. h., auskonturiert wird. Die Blasform kann dabei z. B. zwei Formhälften umfassen, die um eine gemeinsame Achse drehbar gelagert sind. Durch Drehen um diese Achse können die Formhälften verschlossen werden, so dass sich im Inneren der durch die beiden Formhälften begrenzten Blasform ein Hohlraum bildet, in dem ein Vorformling formgeblasen werden kann. Die Ausgestaltung eines solchen Formträgers ist z. B. in der Europäischen Patentschrift EP 1 276 598 B1 offenbart.

Die Europäische Patentschrift EP 0 572 107 B1 offenbart einen Arbeitskopfwechsler für ein Rotationssystem zur Behandlung von Behältern. Das Rotationssystem umfasst einen drehbaren Körper zum Befördern von Behältern in einem bestimmten Intervall. Ebenso ist eine Vielzahl an Arbeitsköpfen vorgesehen, die in gleichen Abständen am Umfang des drehbaren Körpers beabstandet sind, um jeden der Behälter, die durch den drehbaren Körper befördert werden, einen Behandlungsvorgang zu unterziehen. Der Behandlungsvorgang kann z. B. einen Deckelaufsatzvorgang oder einen Einfüllvorgang umfassen. Es wird eine Verbindung zwischen dem drehbaren Körper und jedem Arbeitskopf hergestellt, um somit jeden Arbeitskopf auf den drehbaren Körper abnehmbar zu montieren. Der Arbeitskopfwechsler umfasst dabei eine Steuereinrichtung zum Steuern der Rotation des drehbaren Körpers, so dass jeder Arbeitskopf hintereinander und abwechselnd an einer vorbestimmten Arbeitskopfwechselstation gestoppt wird. Ebenso ist ein Arbeitskopfzufuhrmechanismus vorgesehen, der zur Entfernung eines Arbeitskopfes an der vorgesehenen Arbeitskopfwechselstation den entsprechenden Wechselvorgang durchführt. Nachdem der Arbeitskopf entnommen worden ist, kann an die dafür vorgesehene leere Stelle nunmehr ein neuer Arbeitskopf eingesetzt werden.

Die Deutsche Offenlegungsschrift DE 10 2005 035 233 A1 offenbart eine Vorrichtung zur Halterung von Blasformsegmenten sowie ein Verfahren gemäß dem Oberbegriff des Anspruchs 1.

Die Blasformsegmente sind in einem Tragelement angeordnet. Die Blasformsegmente sind dabei mit mindestens einem Arretierelement lösbar im Tragelement fixierbar. Das Arretierelement ist sowohl zur Bereitstellung einer formschlüssigen Halterung, als auch zur Bereitstellung einer kraftschlüssigen Halterung für das jeweilige Blasformsegment ausgebildet. Zum Wechseln der Blasformsegmente, muss das Tragelement in entsprechender Weise geöffnet werden, so dass die entsprechenden Vorgänge für den Wechsel der Blasformsegmente an einer einzigen Position ausgeführt werden müssen.

Aufgabe der Erfindung ist, ein Verfahren zu schaffen, das eine Umrüstung einer Blasmaschine ermöglicht, so dass die Umrüstzeiten für das Umrüsten der Blasmaschine auf ein Minimum reduziert sind.

Die obige Aufgabe wird durch ein Verfahren gelöst, das die Merkmale des Anspruchs 1 umfasst.

Es ist von besonderem Vorteil, wenn für das Umrüsten einer Blasmaschine mindestens zwei Arbeitsbereiche vorgesehen werden, wobei an jedem Arbeitsbereich unterschiedliche Prozesse für das Umrüsten der Blasmaschine ausgeführt werden. Für das Umrüsten der Blasmaschine wird an mindestens einem Arbeitsbereich der Formenträger geöffnet und/oder die vorgesehenen Medienverbindungen mit dem Formenträger, bzw. den Blasformelementen gelöst. An einem anderen Arbeitsbereich werden die mehreren Teile der Blasform aus dem Formenträger entnommen und gegen eine Blasform eines anderen Typs ersetzt. Schließlich wird der Formenträger geschlossen und/oder die Medienzuführung wird wieder verbunden. Es ist ebenfalls denkbar, dass das Öffnen des Formenträgers vor dem Eintreffen des Formenträgers am jeweiligen Arbeitsbereich erfolgt. Ebenso kann das Schließen des Formenträgers nach dem Verlassen des Arbeitsbereichs erfolgen. Hierzu kann z.B. ein Kurvenelement verwendet werden.

Ein Zeitaufwand für das Durchführen der Tätigkeit an jedem der Vielzahl der Arbeitsbereiche ist derart bemessen, dass der Zeitaufwand an jedem der Arbeitsbereiche etwa gleich groß ist. Dies hat den Vorteil, dass es bei dem Wechsel der Formenträger von mindestens einem Arbeitsbereich zum nächsten nicht zu Wartezeiten kommt. Wartezeiten sind dann erforderlich, wenn die Tätigkeiten an allen Arbeitsbereichen bis auf einen Arbeitsbereich abgeschlossen sind. Mit dem Wechsel muss auf den "langsamsten" Arbeitsbereich gewartet werden. Dies führt selbstverständlich zu einer nicht optimalen Ausnutzung der für die Umrüstung der Blasmaschine vorgesehenen Stillstandzeit.

Der Zeitaufwand an den mindestens einem Arbeitsbereich zum Öffnen der Formenträger und zum Lösen der Medienverbindungen ist im Wesentlichen mit dem Zeitaufwand für das Entnehmen der Blasform, dem Ersetzen der Blasform und dem Schließen des Formenträgers und dem Verbinden der Medienzuführung gleich.

Es ist von besonderem Vorteil, wenn mindestens drei Arbeitsbereiche vorgesehen sind. An einem ersten Arbeitsbereich wird der Formenträger geöffnet und die Medienverbindung gelöst. An einem zweiten Arbeitsbereich werden die mehreren Teile der Blasform aus dem Formenträger entnommen und gegen eine Blasform eines anderen Typs ersetzt. An einem dritten Arbeitsbereich werden die Formenträger geschlossen und die Medienzuführung wieder verbunden.

Es ist ebenso denkbar, dass in dem ersten Arbeitsbereich ebenfalls die Befestigung für die Teile der Blasform gelöst werden. In dem dritten Arbeitsbereich können die Befestigungselemente für die Teile der Blasform wieder angezogen werden. Ebenso ist es denkbar, dass die Befestigungen für die Teile der Blasform in der Station gelöst und befestigt werden, in der die Teile der Blasform gegen Teile einer Blasform eines anderen Typs ausgetauscht werden.

Falls für den Austausch der Blasformen, bzw. für das Umrüsten der Blasmaschine drei Arbeitsbereiche vorgesehen sind, empfiehlt es sich, dass der Zeitaufwand an dem ersten Arbeitsbereich zum Öffnen der Formenträger und zum Lösen der Medienverbindungen im Wesentlichen dem Zeitaufwand für das Entnehmen der Blasform und Ersetzen der Blasform an dem zweiten Arbeitsbereich entspricht. Ferner muss der Zeitaufwand an dem dritten Arbeitsbereich für das Schließen des Formenträgers und dem Verbinden der Medienzuführung im Wesentlichen dem Zeitaufwand an dem ersten, bzw. zweiten Arbeitsbereich entsprechen. Es ist selbstverständlich, dass sich der Zeitaufwand im ersten Arbeitsbereich verringert, wenn das Öffnen der Formenträger bereits vor dem Eintreffen der Formenträger am ersten Arbeitsbereich erfolgt. Ebenso wird sich der Zeitaufwand für den denjenigen Arbeitsbereich verringern, wenn das Schließen des Formenträgers nicht in dem dafür vorgesehenen Arbeitbereich erfolgt.

Es ist von Vorteil, wenn an jedem der Arbeitsbereiche die vorgesehenen Prozesse automatisch ausgeführt werden. Ebenso ist es denkbar, dass mit Ausnahme des Arbeitsbereichs, an dem das Entnehmen der Blasform und Ersetzen der Blasform durchgeführt wird, an den anderen Arbeitsbereichen die vorgesehenen Prozesse automatisch ausgeführt werden. Das Entnehmen der Blasform und Ersetzen der Blasform wird manuell durchgeführt.

Für das automatische Ausführen der Prozesse ist mindestens ein Roboter an dem entsprechendem Arbeitsbereich vorgesehen. Dieser Roboter führt zumindest einen Teil der Prozesse automatisch durch, die für das Umrüsten der Blasmaschine notwendig sind.

Es hat sich gezeigt, dass der Zeitaufwand zur Durchführung der Prozesse an den jeweiligen Arbeitsbereichen zwischen 20 und 60 Sekunden liegen soll.

Um für das Umrüsten einer Blasmaschine eine entsprechende Zeitersparnis zu erreichen und somit die Stillstandzeiten einer Blasmaschine während des Umrüstens zu reduzieren, ist es von Vorteil, wenn die Prozesse für das Umrüsten einer Blasmaschine an den verschiedenen Arbeitsstationen simultan durchgeführt werden. Der Wechsel der Formenträger von einem Arbeitsbereich zum nächsten Arbeitsbereich wird derart eingestellt, dass sich eine Taktzeit nach dem längsten an einem Arbeitsbereich benötigten Zeitaufwand richtet.

Die Formenträger sind an einer Transporteinrichtung angeordnet, wobei die Transporteinrichtung die Formenträger entsprechend der Taktzeit zwischen den Arbeitsbereichen wechselt.

Die Transporteinrichtung kann linear ausgestaltet sein. Ebenso ist es denkbar, dass die Transporteinrichtung als Rad ausgebildet ist, wobei das Rad die Vielzahl der Formenträger trägt.

Falls lediglich die Blasform eines anderen Typs eingesetzt werden muss und die Höhe der zu blasenden Flasche gleich bleibt, wird an dem Arbeitsbereich, an dem die Blasform eines anderen Typs eingesetzt wird, lediglich eine erste Blasformhälfte, eine zweite Blasformhälfte und ein Bodenteil der Blasform ausgetauscht. Weiterhin gibt es Fälle, bei denen nur die erste Blasformhälfte und die zweite Blasformhälfte ausgetauscht werden müssen, da auch die Bodenform gleich bleibt. Dies kommt häufig dann vor, wenn bei relativ einfachen Flaschen Standardböden Verwendung finden.

Falls sich zusätzlich zum Typ der Blasform auch die Höhe der zu blasenden Flasche ändert, wird an dem Arbeitsbereich, an dem die Blasform eines anderen Typs eingesetzt wird, eine erste Blasformhälfte, eine zweite Blasformhälfte, ein Bodenteil der Blasform und ein Streckbegrenzer ausgetauscht.

Der Austausch der Teile der Blasform erfolgt in einer Ausführungsform erst dann, wenn die Verrieglungen für die jeweiligen Teile der Blasform an dem Formenträger gelöst worden sind. Entsprechend ist nach dem Einsetzen der Teile in den Formenträger die Verriegelung wieder zu schließen. Die Tätigkeit kann automatisch oder manuell erfolgen. Eine andere Ausführungsform ist, dass die Teile der Blasform an dem Formenträger zunächst ohne eine Verriegelung gehaltert werden und dass die Verriegelung erst durch das Schließen des Formenträgers erfolgt. Ebenso wird die Verriegelung geöffnet, wenn der Formenträger geöffnet ist. Es liegt für einen Fachmann im herkömmlichen Fachwissen, wie die einzelnen Teile der Blasform im Formenträger zu befestigen und/oder zu lösen sind.

Im Folgenden sollen Ausführungsbeispiele die Erfindung und ihre Vorteile anhand der beigefügten Figuren näher erläutern.
Figur 1 zeigt eine schematische Darstellung einer Blasmaschine, die mit einem Ofen verbunden ist, der der Blasmaschine die Vorformlinge mit einer definierten Temperatur zuführt.
Figur 2 zeigt eine schematische Darstellung der drei Arbeitsbereiche, an dem die Prozesse für den Austausch der Blasformen durchgeführt werden.
Figur 3 zeigt eine schematische Darstellung, bei der bereits an einem ersten Arbeitsbereich mit dem Umrüsten der Blasmaschine begonnen worden ist.
Figur 4 zeigt die Situation des Umrüstens der Blasmaschine, bei der der im ersten Arbeitsbereich geöffnete Formträger zum zweiten Arbeitsbereich transportiert worden ist.
Figur 5 zeigt die Situation, bei der im ersten Arbeitsbereich der neu angekommene Formträger geöffnet wird und bei der simultan im zweiten Arbeitsbereich die Blasformen, bzw. die Teile der Blasformen ausgetauscht werden.
Figur 6 zeigt die Situation, bei der der Formträger, welcher mit den neuen Blasformeilen versehen ist, zum dritten Arbeitsbereich transportiert worden ist.
Figur 7 zeigt die Situation, bei der der Formträger im dritten Arbeitsbereich wieder verschlossen worden ist.

Obwohl die nachfolgende Beschreibung des Verfahrens zum Umrüsten einer Blasmaschine sich auf drei Arbeitsbereiche beschränkt, soll dies nicht als eine Beschränkung der Erfindung aufgefasst werden. Es ist für einen Fachmann selbstverständlich, dass man eine Blasmaschine mit weniger als drei Arbeitsbereichen und mit mehr als drei Arbeitsbereichen ausstatten kann, an denen die Umrüstung einer Blasmaschine durchgeführt werden kann. Ebenso soll die Anzahl der auszutauschenden Teile der Blasform, bzw. des Streckbegrenzers (nicht dargestellt) nicht als Beschränkung der Erfindung aufgefasst werden. Die nachfolgende Beschreibung bezieht sich auf Teile der Blasform, die mit einer Medienzuführung verbunden sind. Dies ist lediglich eine von vielen Ausführungsformen. Je nach Anforderung der herzustellenden Kunststoffflasche sind alle Teile der Blasform mit einer Medienzuführung versehen oder mindestens nur ein bestimmter Teil der Blasform ist mit einer Medienzuführung versehen. Ferner sei darauf hingewiesen, dass in den verschiedenen Figuren für gleiche Elemente die gleichen Bezugszeichen verwendet werden.

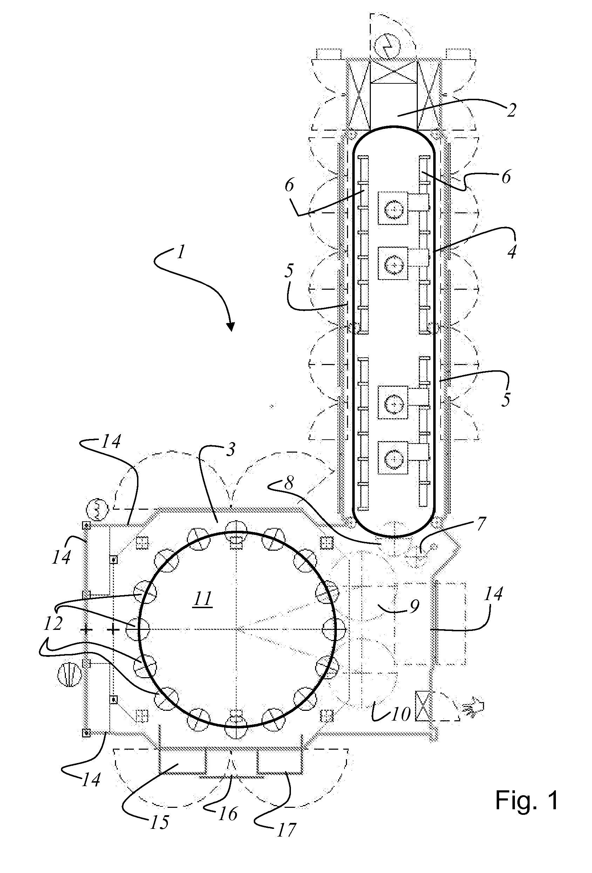

**Figur 1** zeigt eine schematische Ansicht einer Vorrichtung, mit der Kunststoffflaschen im Wesentlichen durch ein Streckblasverfahren hergestellt werden können. Die Vorrichtung 1 besteht im Wesentlichen aus einem Ofen 2, in dem Vorformlinge für die herzustellenden Kunststoffflaschen auf eine bestimmte Temperatur gebracht werden, damit aus diesen Vorformlingen die Kunststoffflaschen im Blasverfahren, bzw. Streckblasverfahren hergestellt werden können. Mit dem Ofen 2 ist die Blasmaschine 3 verbunden. In dem Ofen 2 ist eine Fördereinrichtung 4 vorgesehen, die eine Vielzahl von Vorformlingen an einer Heizeinrichtung 5 vorbeiführt. Zum Inneren des Ofens 2 hin ist die Transporteinrichtung 4 mittels Wärme reflektierenden Kacheln 6 abgeschirmt. An einer Übergabeposition 7 werden die Vorformlinge in den Ofen 2 eingeleitet. An einer Ausgabeposition 8 werden die erwärmten Vorformlinge an eine Eingabeposition 9 für die Blasmaschine 3 übergeben. An einer Ausgabeposition 10 der Blasmaschine werden die fertigen Kunststoffflaschen zu einer weiteren Bearbeitung, bzw. zur Abfüllung (nicht dargestellt) ausgegeben.

In der in Figur 1 gezeigten Darstellung umfasst die Blasmaschine 3 eine Transporteinrichtung 11, an der die Vielzahl der Formenträger 12 angeordnet ist. In der hier gezeigten schematischen Darstellung der Blasmaschine 3 ist die Transporteinrichtung 11 als Rad ausgebildet. Es ist ebenso denkbar, dass die Transporteinrichtung 11 als im Wesentlichen lineare Transporteinrichtung ausgebildet ist. Die Blasmaschine 3 ist von mehreren Wänden 14 eingehaust. An mindestens einer Wand 14 der Blasmaschine 3 sind in der hier dargestellten Ausführungsform ein erster Arbeitsbereich 15, ein zweiter Arbeitsbereich 16 und ein dritter Arbeitsbereich 17 ausgebildet. An diesen Arbeitsbereichen 15, 16, 17 kann die Umrüstung der Blasmaschine 3 durchgeführt werden. Wie bereits erwähnt, kann die Umrüstung der Blasmaschine 3 an jedem der Arbeitsbereiche 15, 16 und 17 automatisch durchgeführt werden. Zu dieser automatischen Durchführung der Umrüstung der Blasmaschine 3 sind entsprechende Roboter oder konventionelle Handhabungsgeräte (nicht dargestellt) vorgesehen. Ebenso ist es denkbar, dass an dem einen oder dem anderen Arbeitsbereich die Umrüstung der Blasmaschine 3 manuell durchgeführt wird. Eine manuelle Durchführung der Umrüstung der Blasmaschine 3 an einem Arbeitsbereich empfiehlt sich dann, wenn der Aufwand für eine automatische Umrüstung der Blasmaschine 3 an diesem Arbeitsbereich einen nicht zu vertretenden Aufwand darstellt. Ob die Umrüstung der Blasmaschine 3 an den jeweiligen Arbeitsbereichen 15, 16 und 17 automatisch und/oder manuell durchgeführt wird, soll nicht als eine Beschränkung der Erfindung aufgefasst werden.

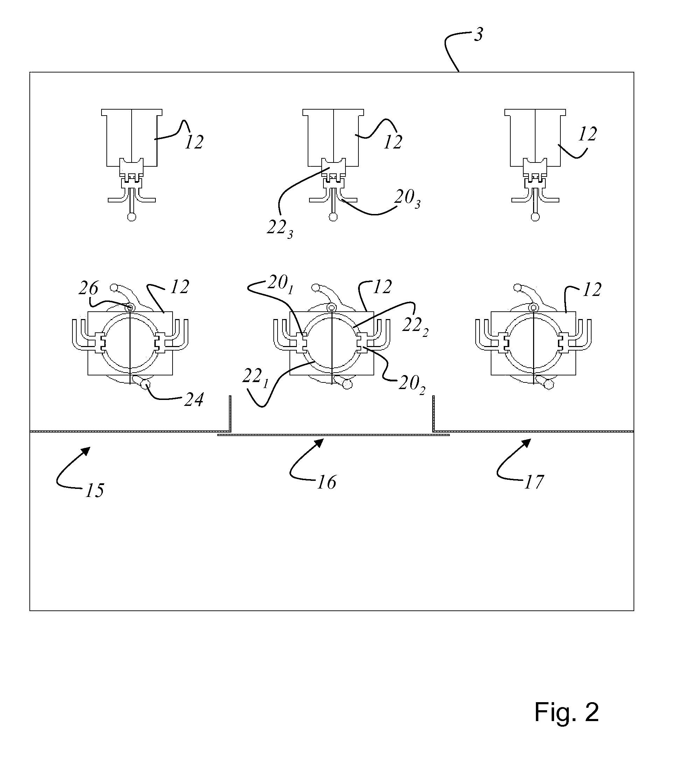

**Figur 2** zeigt eine schematische Darstellung, bei der die Formenträger 12, welche innerhalb der Blasmaschine 3 angeordnet sind, den entsprechenden Arbeitsbereichen 15, 16 und 17 zugeordnet sind, damit eine entsprechende Umrüstung der Blasmaschine 3 durchgeführt werden kann. In den in den Figuren 2 bis 7 gezeigten Darstellungen wird zur besseren Verdeutlichung des Verfahrens der Formenträger 12 zum einen in der Draufsicht und zum anderen in einer Seitenansicht dargestellt. Der Formenträger 12 ist mehrteilig aufgebaut und trägt somit die mehrteilige Blasform 22, welche in der hier dargestellten Ausführungsform aus einem ersten Teil der Blasform 22₁, einem zweiten Teil der Blasform 22₂ und einem dritten Teil der Blasform 22₃ besteht. Der dritte Teil der Blasform 22₃ ist das Bodenteil, welches letztendlich die Bodenform der zu fertigenden Kunststoffflasche bildet. Der erste Teil der Blasform 22₁ ist mit einer entsprechenden Medienzuführung 20₁ verbunden. Ebenso ist der zweite Teil der Blasform 22₂ mit einer entsprechenden Medienzufuhr 20₂ verbunden. Auch der dritte Teil der Blasform 22₃ ist mit einer entsprechenden Medienzufuhr 20₃ verbunden. Da der Formenträger 12 anteilig aufgebaut ist, ist zur Verriegelung des Formenträgers 12 ein Verschlusselement 24 vorgesehen. Nachdem das Verschlusselement 24 gelöst worden ist, kann der Formenträger 12 geteilt werden. Zur Teilung des Formenträgers 12 kann dieser um eine Achse 26 auseinandergeschwenkt werden. Bei dem in Figur 2 dargestellten Verfahrensschritt wurde die Transporteinrichtung 4 der Blasmaschine derart gesteuert, dass jeweils einem der Arbeitsbereiche 15, 16 und 17 jeweils ein Formenträger 12 gegenüberliegt. Die Formenträger 12 sind in der in Figur 2 gezeigten Darstellung alle noch verschlossen.

Für die nachfolgende Beschreibung der einzelnen Verfahrensschritte für das Umrüsten der Blasmaschine 3 wird dabei auf die Bezeichnung der einzelnen Elemente des Formenträgers verzichtet, um die Übersichtlichkeit der nachfolgenden Figuren zu bewahren.

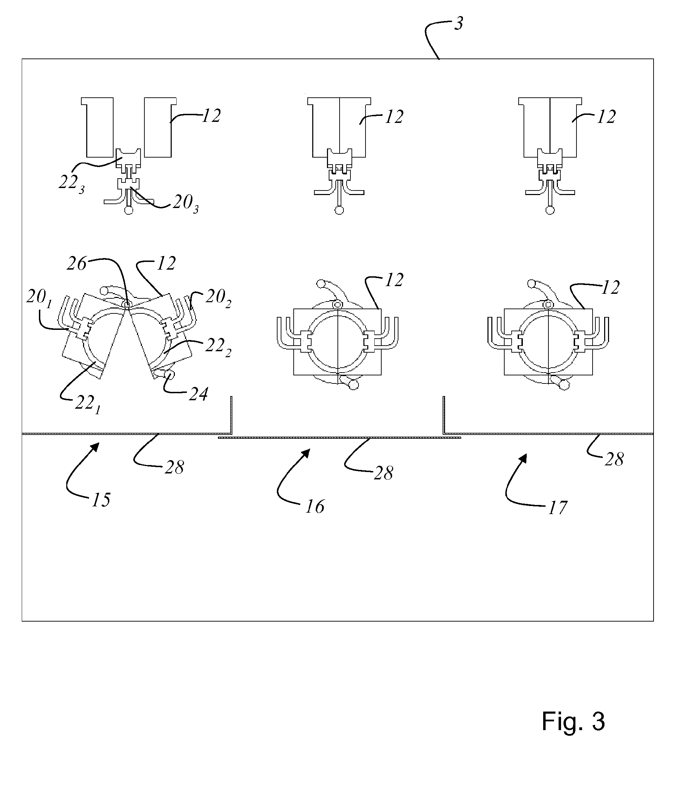

**Figur 3** zeigt die Situation des erfindungsgemäßen Verfahrens für die Umrüstung einer Blasmaschine 3, bei der an dem ersten Arbeitsbereich 15 der Formenträger 12 um die Achse 26 auseinandergeschwenkt worden ist. Ferner wurden an diesem ersten Arbeitsbereich 15 die jeweiligen Medienzuführungen 20₁, 20₂ und 20₃ von den jeweiligen Teilen der Blasformen 22₁, 22₂ und 22₃ gelöst. Wie ebenfalls aus der Figur 3 ersichtlich ist, sind die jeweiligen Arbeitsbereiche 15, 16 und 17 mit einer entsprechenden Abschirmung 28 versehen. Diese Abschirmung 28 ist aus Gründen der Arbeitssicherheit vorgesehen.

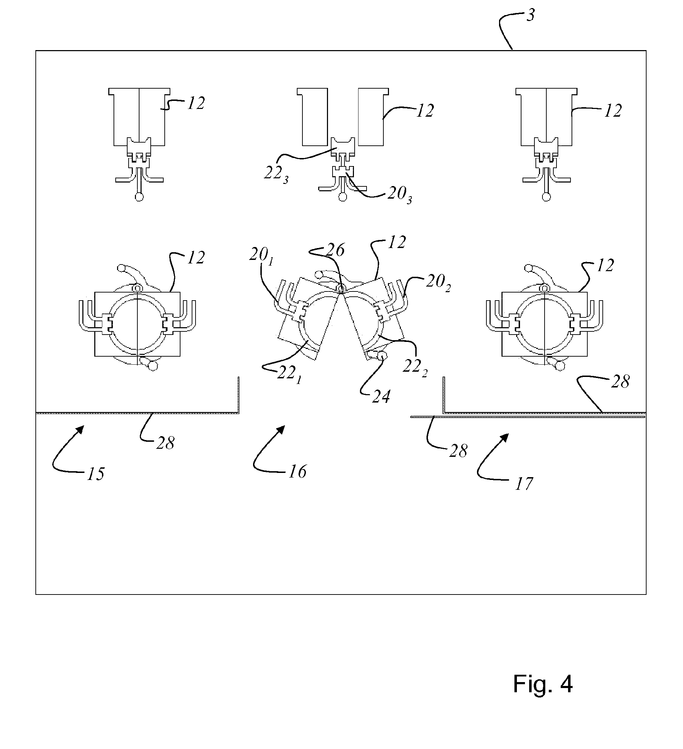

**Figur 4** zeigt diejenige Situation des erfindungsgemäßen Verfahrens zum Umrüsten einer Blasmaschine 3, bei der die Transporteinrichtung 4 der Blasmaschine 3 die Formenträger 12 zu dem nächsten Arbeitsbereich transportiert hat. In Figur 4 befindet sich nun der in dem ersten Arbeitsbereich 15 geöffnete Formenträger am zweiten Arbeitsbereich 16. Damit im zweiten Arbeitsbereich 16 die Teile der Blasformen 22₁, 22₂ und 22₃ ausgewechselt werden können, wird hierzu die Abschirmung 28 des zweiten Arbeitsbereichs 16 entfernt, bzw. beiseite geschoben. Der sich im zweiten Arbeitsbereich 16 befindliche Formenträger 12 ist somit für die manuelle, bzw. automatische Handhabung des Prozesses für die Umrüstung der Blasmaschine 3 zugänglich.

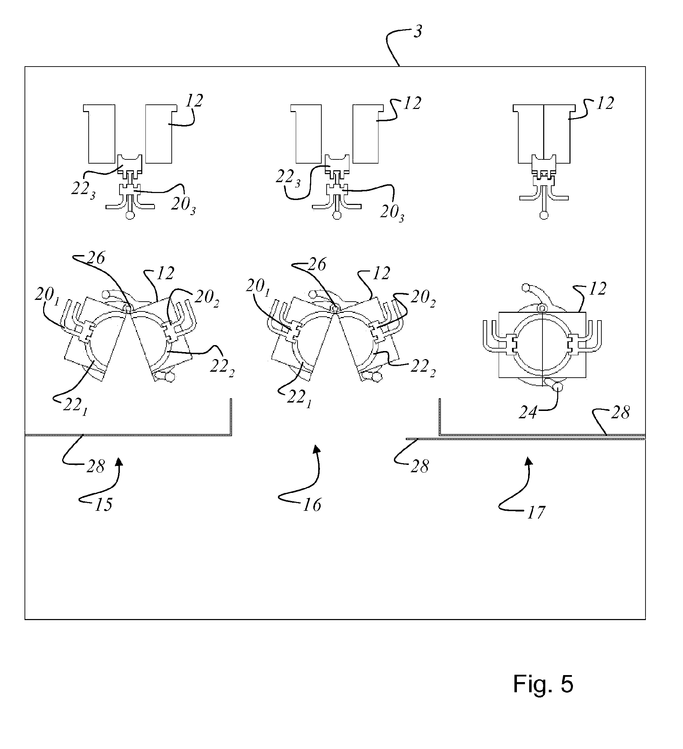

**Figur 5** zeigt diejenige Situation des Verfahrens für die Umrüstung der Blasmaschine 3, bei der am ersten Arbeitsbereich 15 und am zweiten Arbeitsbereich 16 jeweils Prozesse am Formenträger 12 für die Umrüstung der Blasmaschine 3 ausgeführt werden. Während am zweiten Arbeitsbereich 16 die einzelnen Teile der Blasform 22₁, 22₂ und 22₃ ausgetauscht werden, wird am ersten Arbeitsbereich 15 der Formenträger 12 geöffnet und die Medienzuführungen 20₁, 20₂ und 20₃ gelöst. Die Abschirmung 28 vor dem zweiten Arbeitsbereich 16 ist entfernt, um den Austausch der Teile der Blasform 22₁, 22₂ und 22₃ zu ermöglichen. Es ist von besonderem Vorteil, wenn der Zeitaufwand für die Durchführung der Tätigkeiten im ersten Arbeitsbereich 15 und der Zeitaufwand für die Durchführung der Tätigkeiten im zweiten Arbeitsbereich 16 in etwa gleich sind.

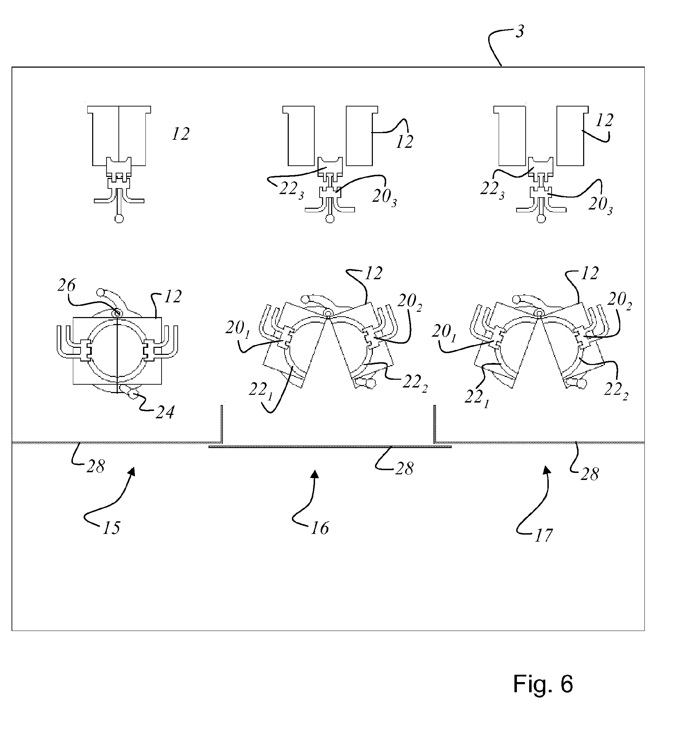

**Figur 6** zeigt diejenige Situation des Verfahrens zum Umrüsten der Blasmaschine 3, bei der der Formenträger 12, welcher dem zweiten Arbeitsbereich 16 aus Figur 5 gegenüber gelegen hat, nun zu dem dritten Arbeitsbereich 17 transportiert worden ist. Der Weitertransport der Formenträger 12 von einem Arbeitsbereich zum nächsten Arbeitsbereich wird dann durchgeführt, wenn die Tätigkeiten, bzw. Prozesse an den jeweiligen Arbeitsbereichen 15, 16 und 17 abgeschlossen sind. Somit ist klar, dass sich die Taktzeit der Transporteinrichtung 4 an denjenigen Arbeitsbereich zu richten hat, der für die Durchführung der Tätigkeiten den größten Zeitaufwand benötigt. Am Optimalsten ist es, wenn der Zeitaufwand an jedem der Arbeitsbereiche für die Durchführung der dort erforderlichen Tätigkeiten gleich groß wäre. Dies würde zu einer optimalen Nutzung der Stillstandzeit der Blasmaschine 3 führen. In der in Figur 6 dargestellten Situation für das Verfahren zum Umrüsten der Blasmaschine 3 ist nun am ersten Arbeitsbereich 15 von der Transporteinrichtung 4 ein neuer und noch verschlossener Formenträger 12 eingeschränkt worden. An dem zweiten Arbeitsbereich 16 ist der geöffnete Formenträger 12 angekommen, von welchem nun die Teile der Blasformen 22₁, 22₂ und 22₃ ausgewechselt werden müssen. An dem dritten Arbeitsbereich 17 ist der geöffnete Formenträger 12 angekommen, der nun den anderen Typ der Blasform 22, bzw. Teile der Blasform 22₁, 22₂ und 22₃ trägt. Ferner sind am dritten Arbeitsbereich 17 die Medienzuführungen 20₁, 20₂ und 20₃ noch nicht mit den Teilen der Blasform 22₁, 22₂ und 22₃ verbunden.

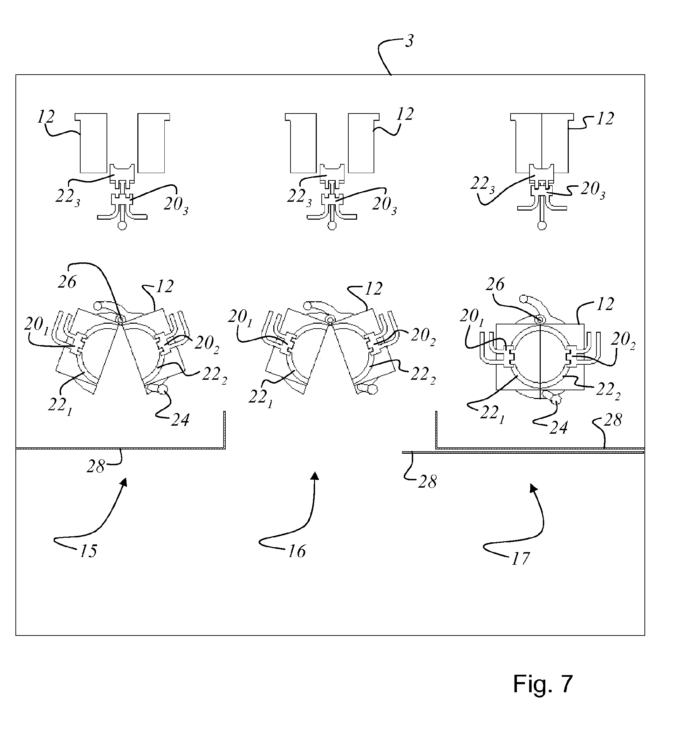

**Figur 7** stellt diejenige Situation des Verfahrens zum Umrüsten einer Blasmaschine 3 dar, bei der an allen Arbeitsbereichen 15, 16 und 17 Tätigkeiten durchgeführt werden. Im ersten Arbeitsbereich 15 wird der Formenträger 12 geöffnet. Hierzu wird das Verschlusselement 24 gelöst und der Formträger um die Achse 26 geschwenkt und folglich geteilt. Ebenso werden die Medienzuführungen 20₁, 20₂ und 20₃ von den jeweils zugehörigen Teilen der Blasform 22₁, 22₂ und 22₃ gelöst. Simultan dazu wird am zweiten Arbeitsbereich 16 die Abschirmung 28 geöffnet und die Teile der Blasform 22₁, 22₂ und 22₃ gegen andere Teile eines anderen Typs einer Blasform ausgetauscht. Ebenfalls simultan zu den am ersten Arbeitsbereich 15 und am zweiten Arbeitsbereich 16 ablaufenden Prozessen, werden ebenfalls simultan am dritten Arbeitsbereich 17 Prozesse für das Umrüsten der Blasmaschine 3 durchgeführt. Am dritten Arbeitsbereich 17 wird der Formenträger 12 um die Achse 26 wieder zusammengeklappt und mit dem Verschlusselement 24 verschlossen. Ebenso werden am dritten Arbeitsbereich 17 die Medienzuführungen 20₁, 20₂ und 20₃ wieder mit den jeweiligen Teilen der Blasform verbunden. Die Transporteinrichtung 4 der Blasmaschine 3 führt nun so lange Formenträger 12 zu den jeweiligen Arbeitsbereichen 15, 16 und 17 zu, bis alle in der Blasmaschine 3 vorhandenen Formenträger 12 mit dem neuen Blasformtyp versehen sind. Durch das erfindungsgemäße Verfahren soll die aufgrund des Umrüstens der Blasmaschine 3 bedingte Stillstandzeit auf ein Minimum (z.B. 20 bis 60 Minuten) begrenzt sein.

## Patentansprüche

1. Verfahren zum Umrüsten einer Blasmaschine (3), die eine Vielzahl von mehrteiligen Formenträgern (12) umfasst, von denen jeder eine mehrteilige Blasform (22) trägt, wobei mindestens ein Teil der Blasform (22₁, 22₂, 22₃) oder der Formträger (12) mit einer Medienzuführung (20₁, 20₂, 20₃) verbunden ist, **gekennzeichnet durch** die folgenden Schritte:
▪ dass an der Blasmaschine (3) mindestens drei Arbeitsbereiche (15, 16, 17) vorgesehen werden, wobei an jedem Arbeitsbereich (15, 16, 17) unterschiedliche Prozesse ausgeführt werden,
▪ dass vor oder an mindestens einem ersten Arbeitsbereich (15) der Formenträger (12) geöffnet wird und/oder die Medienzuführungen (20₁, 20₂, 20₃) gelöst werden,
▪ dass an einem zweiten Arbeitsbereich (16) die mehreren Teile der Blasform (22₁, 22₂, 22₃) aus dem Formenträger (12) entnommen werden und gegen Teile einer Blasform (22) eines anderen Typs ersetzt werden; und
▪ dass an einem dritten Arbeitsbereich (17) die Formenträger (12) geschlossen werden und/oder die Medienzuführung (20₁, 20₂, 20₃) wieder verbunden wird.

2. Verfahren nach Anspruch 1, wobei ein Zeitaufwand für das Durchführen der Tätigkeiten an jedem der Vielzahl der Arbeitsbereiche (15, 16, 17) derart bemessen ist, dass er etwa gleich groß ist.

3. Verfahren nach Anspruch 2, wobei der Zweitaufwand an dem ersten Arbeitsbereich (15) zum Öffnen der Formenträger (12) und/oder zum Lösen der Medienzuführung (20₁, 20₂, 20₃) im Wesentlichen dem Zeitaufwand für das Entnehmen der Teile der Blasform (22₁, 22₂, 22₃) und Ersetzen der Blasform (22₁, 22₂, 22₃) an dem zweiten Arbeitsbereich (16) und im Wesentlichen dem Zeitaufwand an dem dritten Arbeitsbereich (17) für das Schließen des Formenträgers (12) und/oder dem Verbinden der Medienzuführung (20₁, 20₂, 20₃) entspricht.

4. Verfahren nach Anspruch 3, wobei das Öffnen und/oder das Schließen der Formenträger (12) mittels eines Kurvenelements durchgeführt wird.

5. Verfahren nach einem der Ansprüche 1 bis 4, wobei das Öffnen des Formenträgers (12) vor dem Eintreffen des Formenträgers am ersten Arbeitsbereich (15) erfolgt und/oder dass das Schließen des Formenträgers (12) nach dem Verlassen des dritten Arbeitsbereichs (17) erfolgt.

6. Verfahren nach einem der Ansprüche 1 bis 5, wobei an jedem der Arbeitsbereiche (15, 16, 17) die vorgesehenen Prozesse automatisch ausgeführt werden.

7. Verfahren nach einem der Ansprüche 1 bis 5, wobei das Entnehmen der Teile der Blasform (22₁, 22₂, 22₃) und Ersetzen der Teile der Blasform (22₁, 22₂, 22₃) manuell durchgeführt wird und wobei an den anderen Arbeitsbereichen (15, 17) die vorgesehenen Prozesse automatisch ausgeführt werden

8. Verfahren nach einem der Ansprüche 1 bis 7, wobei Entnehmen und Ersetzen der mehreren Teile der Blasform (22₁, 22₂, 22₃) aus dem Formenträger (12) die weiteren Schritte umfasst:
• dass eine Verrieglung für die Blasformen (22₁, 22₂, 22₃) gelöst wird;
• dass die Teile der Blasform (22₁, 22₂, 22₃) aus dem Formenträger (12) entnommen werden;
• dass die Teile der Blasform (22₁, 22₂, 22₃) eines anderen Typs in den Formenträger (12) eingesetzt werden; und
• dass die Verrieglung für die Blasformen (22₁, 22₂, 22₃) wieder geschlossen wird.

9. Verfahren nach einem der Ansprüche 1 bis 8, wobei der Zeitaufwand zur Durchführung der Prozesse an den jeweiligen Arbeitsbereichen (15, 16, 17) zwischen 20 Sekunden und 60 Sekunden beträgt.

10. Verfahren nach einem der Ansprüche 1 bis 9, wobei die Prozesse an den Formenträgern (12) an den verschiedenen Arbeitsbereichen (15, 16, 17) simultan durchgeführt werden, und dass der Wechsel der Formenträger (12) von einem Arbeitsbereich zum nächsten Arbeitsbereich derart eingestellt wird, dass sich eine Taktzeit nach dem längsten an einem Arbeitsbereich benötigten Zeitaufwand richtet.

11. Verfahren nach einem der Ansprüche 1 bis 10, wobei die Formenträger (12) an einer Transporteinrichtung (11) angeordnet sind, wobei die Transporteinrichtung (11) die Formenträger (12) entsprechend der Taktzeit zwischen den Arbeitsbereichen (15, 16, 17) wechselt.

12. Verfahren nach Anspruch 11, wobei die Transporteinrichtung (11) zumindest teilweise linear ausgestaltet ist.

13. Verfahren nach Anspruch 11, wobei die Transporteinrichtung (11) als Rad ausgebildet ist, auf dem die Vielzahl der Formenträger (12) angeordnet ist.

14. Verfahren nach einem der Ansprüche 1 bis 13, wobei an dem Arbeitsbereich (16), an dem die Teile der Blasform (22₁, 22₂, 22₃) eines anderen Typs eingesetzt wird, eine erste Blasformhälfte (22₁), eine zweite Blasformhälfte (22₂) und ein Bodenteil (22₃) der Blasform (22) ausgetauscht wird, wobei sich die Blasformen (22) des unterschiedlichen Typs in der Höhe gleich sind.

15. Verfahren nach einem der Ansprüche 1 bis 13, wobei an dem Arbeitsbereich, an dem die Teile der Blasform (22₁, 22₂, 22₃) eines anderen Typs eingesetzt werden, eine erste Blasformhälfte (22₁), eine zweite Blasformhälfte (22₂), ein Bodenteil (22₃) der Blasform (22) und ein Streckbegrenzer ausgetauscht werden, wobei sich die Blasformen (22) des unterschiedlichen Typs in der Höhe unterscheiden.

## Claims

1. A method for retooling a blow molding machine (3) comprising a plurality of multi-part blow mold holders (12), each holding a multi-part blow mold (22), wherein at least a part of the blow mold (22₁, 22₂, 22₃) or the blow mold holder (12) is connected to a media supply (20₁, 20₂, 20₃), **characterized by** the following steps:
• that the blow molding machine (3) provides at least three work stations (15, 16, 17), wherein different processes are executed at each work station (15, 16, 17),
• that the blow mold holder (12) is opened and/or the media supplies (20₁, 20₂, 20₃) are disconnected, before or at least at a first work station (15),
• that at a second work station (16), the multiple parts of the blow mold (22₁, 22₂, 22₃) are removed from the blow mold holder (12) und are exchanged for parts of a blow mold (22) of a different type; and
• that at a third work station (17), the blow mold holders (12) are closed and/or the media supply (20₁, 20₂, 20₃) is reconnected.

2. Method according to claim 1, wherein a time requirement for executing the tasks at each of the plurality of work stations (15, 16, 17) is allocated in such a way that it is about the same.

3. Method according to claim 2, wherein the time requirement at the first work station (15) for opening the blow mold holder (12) and/or for disconnecting the media supply (20₁, 20₂, 20₃) substantially corresponds to the time requirement for removing the parts of the blow mold (22₁, 22₂, 22₃) and replacing the blow mold (22₁, 22₂, 22₃) at the second work station (16) and substantially corresponds to the time requirement at the third work station (17) for closing the blow mold holder (12) and/or connecting the media supply (20₁, 20₂, 20₃).

4. Method according to claim 3, wherein the opening and/or the closing of the blow mold holder (12) is carried out by means of a curve element.

5. Method according to any one of the claims 1 to 4, wherein the opening of the blow mold holder (12) is executed before the blow mold holder (12) arrives at the first work station (15) and/or the closing of the blow mold holder (12) is executed after the blow mold holder (12) leaves the third work station (17).

6. Method according to any one of the claims 1 to 5, wherein the designated processes at each work station (15, 16, 17) are executed automatically.

7. Method according to any one of the claims 1 to 5, wherein removing the parts of the blow mold (22₁, 22₂, 22₃) and replacing the parts of the blow mold (22₁, 22₂, 22₃) is executed manually and wherein the designated processes at the other work stations (15, 17) are executed automatically.

8. Method according to any one of the claims 1 to 7, wherein removing and replacing the multiple parts of the blow mold (22₁, 22₂, 22₃) from the blow mold holder (12) comprises further steps:
• that a lock for the blow molds (22₁, 22₂, 22₃) is released;
• that the parts of the blow mold (22₁, 22₂, 22₃) are removed from the blow mold holder (12);
• that the parts of the blow mold (22₁, 22₂, 22₃) of a different type are inserted into the blow mold holder (12); and
• that the lock for the blow molds (22₁, 22₂, 22₃) is closed again.

9. Method according to any one of the claims 1 to 8, wherein the time requirement for executing the processes at the respective work stations (15, 16, 17) is between 20 seconds and 60 seconds.

10. Method according to any one of the claims 1 to 9, wherein the processes on the blow mold holders (12) are executed simultaneously at the different work stations (15, 16, 17), and the transfer of the mold holders (12) from one work station to the next work station is configured in such a way that a cycle time corresponds to the highest time requirement at one work station.

11. Method according to any one of the claims 1 to 10, wherein the blow mold holders (12) are arranged at a transport device (11), wherein the transport device (11) transfers the blow mold holders (12) between the work stations (15, 16, 17) according to the cycle time.

12. Method according to claim 11, wherein the transport device (11) is designed at least in part in linear form.

13. Method according to claim 11, wherein the transport device (11) is designed as a wheel, on which the plurality of blow mold holders (12) is arranged.

14. Method according to any one of the claims 1 to 13, wherein at the work station (16), where the parts of the blow mold (22₁, 22₂, 22₃) of a different type are inserted, a first blow mold half (22₁), a second blow mold half (22₂) and a bottom part (22₃) of the blow mold (22) are exchanged, wherein the blow molds (22) of the different type have the same height.

15. Method according to any one of the claims 1 to 13, wherein at the work station, where the parts of the blow mold (22₁, 22₂, 22₃) of a different type are inserted, a first blow mold half (22₁), a second blow mold half (22₂), a bottom part (22₃) of the blow mold (22) and a stretch limiter are exchanged, wherein the blow molds (22) of the different type have a different height.

## Revendications

1. Procédé de rééquipement d'une souffleuse (3) qui comprend une pluralité de supports de moules (12) à plusieurs pièces dont chacun supporte un moule de soufflage (22) à plusieurs pièces, pour lequel au moins une partie du moule de soufflage (22₁, 22₂, 22₃) ou le support de moules (12) est connecté à une amenée en fluide (20₁, 20₂, 20₃),
**caractérisé par** les étapes suivantes:
• au moins trois zones de travail (15, 16, 17) sont prévues sur la souffleuse (3), différents processus pouvant être exécutées sur chaque zone de travail (15, 16, 17).
• devant ou sur au moins une première zone de travail (15), le support de moules (12) s'ouvre et/ou les amenées en fluide (20₁, 20₂, 20₃) sont déconnectées,
• sur une seconde zone de travail (16), les pièces multiples du moule de soufflage (22₁, 22₂, 23₃) sont sorties du support de moules (12) et sont remplacées par des pièces d'un moule de soufflage (22) d'un autre type; et
• sur une troisième zone de travail (17), les supports de moules (12) sont fermés et/ou l'amenée en fluide (20₁, 20₂, 20₃) est reconnectée à nouveau.

2. Procédé selon la revendication 1 pour lequel une durée est mesurée pour l'exécution des activités sur chacune des nombreuses zones de travail (15, 16, 17) de sorte à ce qu'elle soit approximativement de même importance.

3. Procédé selon la revendication 2 pour lequel la durée sur la première zone de travail (15) pour l'ouverture du support de moules (12) et/ou pour désactiver l'amenée en fluides (20₁, 20₂, 20₃) correspond essentiellement à la durée pour la sortie des pièces du moule de soufflage (22₁, 22₂, 22₃) et pour le remplacement du moule de soufflage (22₁, 22₂, 22₃) sur la seconde zone de travail (16) et essentiellement à la durée sur la troisième zone de travail (17) pour la fermeture du support de moules (12) et/ou à la connexion de l'amenée en fluides (20₁, 20₂, 20₃).

4. Procédé selon la revendication 3, où l'ouverture et/ou la fermeture des supports de moules (12) est effectuée par un élément de courbe.

5. Procédé selon l'une des revendications 1 à 4 pour lequel l'ouverture du support de moules (12) se fait avant l'arrivée du support de moules sur la première zone de travail (15) et/ou la fermeture du support de moules (12) se fait après avoir quitté la troisième zone de travail (17).

6. Procédé selon l'une des revendications 1 à 5 pour lequel pour chacune des zones de travail (15, 16, 17) les processus prévus sont effectués automatiquement.

7. Procédé selon l'une des revendications 1 à 5 pour lequel le retrait des pièces du moule de soufflage (22₁, 22₂, 22₃) et le remplacement des pièces du moule de soufflage (22₁, 22₂, 23₃) sont effectués manuellement et pour lequel sur les autres zones de travail (15, 17) les processus prévus sont effectués automatiquement.

8. Procédé selon l'une des revendications 1 à 7 pour lequel le retrait et le remplacement de plusieurs pièces du moule de soufflage (22₁, 22₂, 22₃) du support de moules (12) comprend les autres étapes suivantes:
• un verrouillage pour les moules de soufflage (22₁, 22₂, 22₃) est désactivé;
• les pièces du moule de soufflage (22₁, 22₂, 22₃) sont retirées du support de moules (12);
• les pièces du moule de soufflage (22₁, 22₂, 22₃) d'un autre type sont insérées dans le support de moules (12); et
• le verrouillage pour les moules de soufflage (22₁, 22₂, 22₃) est réactivé.

9. Procédé selon l'une des revendications 1 à 8 pour lequel la durée d'exécution des processus sur les zones de travail correspondantes (15, 16, 17) est comprise entre 20 secondes et 60 secondes.

10. Procédé selon l'une des revendications 1 à 9 où les processus sont effectués simultanément sur les supports de moules (12) sur les différentes zones de travail (15, 16, 17), et le changement des supports de moules (12) d'une zone de travail vers la suivante est réglé de sorte à ce qu'une cadence s'oriente sur la durée la plus longue nécessaire sur une zone de travail.

11. Procédé selon l'une des revendications 1 à 10 pour lequel les supports de moule sont situés sur un dispositif de transport (11), le dispositif de transport (11) faisant basculer les supports de moules (12) en fonction de la cadence entre les différentes zones de travail (15, 16, 17).

12. Procédé selon la revendication 11 pour lequel le dispositif de transport (11) est conçu de manière au moins partiellement linéaire.

13. Procédé selon la revendication 11 où le dispositif de transport (11) est formé comme une roue sur laquelle les nombreux supports de moules (12) sont situés.

14. Procédé selon l'une des revendications 1 à 13 pour lequel la zone de travail (16) sur laquelle les pièces du moule de soufflage (22₁, 22₂, 22₃) d'un autre type sont insérées, une première moitié du moule de soufflage (22₁), une seconde moitié du moule de soufflage (22₂) et un fond (22₃) du moule de soufflage (22) sont remplacés, les moules de soufflage (22) du type différent étant de hauteur identique.

15. Procédé selon l'une des revendications 1 à 13 pour lequel la zone de travail (16) sur laquelle les pièces du moule de soufflage (22₁, 22₂, 22₃) d'un autre type sont insérées, une première moitié du moule de soufflage (22₁), une seconde moitié du moule de soufflage (22₂), un fond (22₃) du moule de soufflage (22) et un limiteur de course sont remplacés, les moules de soufflage (22) du type différent étant de hauteur différente.
